# EUROPEAN PATENT APPLICATION

(11) **EP 2 662 206 A2**
(43) Date of publication of application: **13.11.2013**
(21) Application number: 13165154.9
(22) Date of filing: 24.04.2013
(51) Int. Cl.: B31F 1/07

(54) **Method and arrangement for adjusting the position of rolls in fiber web production**

(30) Priority: 08.05.2012 FI 20125497
(71) Applicant: Metso Paper Inc., 00130 Helsinki (FI)
(72) Inventor: Pitkänen, Tatu, FI-04450 Nummenkylä (FI); Linnonmaa, Pekka, FI-00370 Helsinki (FI); Heino, Marko, FI-04430 Järvenpää (FI)
(74) Representative: TBK

(57) **Abstract**

Method and arrangement for adjusting the position of rolls (11, 12) forming a nip (N), in which one of the rolls (12) forming the nip is provided with sensor means (21) for measuring the force or pressure influencing in the nip (N) and the force or pressure measurement result is transmitted to a data processing system (15), which gives a control signal/control information based on which the position of the rolls (11, 12) in relation to each other is adjusted. The other one of the rolls (11) forming the nip (N) has a non-smooth surface.

## Description

The present invention relates to a method in fiber web production and to an arrangement in fiber web production. Especially the invention relates to a method according to the preamble of claim 1 and to an arrangement according to the preamble of claim 12.

In fiber web production it is known from prior art that for a production step there are devices in which two rolls are used that should be at a certain position in relation to each other in order to accomplish the production step as required by the process for example to form a nip. One of such a production step in which a certain position between two rolls is needed is in converting line of tissue webs, especially in embossing process of the tissue web. Typical converting lines for tissue web production are typically laminating, embossing, calendering, winding and/or surface treatment. In which embossing process the fiber web is compressed in an embossing nip between two rolls, to create desired properties to the web and/or combine two or more tissue webs to a single web with two or more plies. In the embossing nip one of the rolls is made of steel and bears the pattern that is transferred through pressure onto the web. This roll is called the embossing roll and its counter roll in the embossing nip is called the marrying roll. The marrying roll is usually a roll with a soft, for example rubber or polyurethane, coating. The marrying roll can also be formed as a deflection compensated roll. The embossing process is both functional and decorative. It combines plies of the tissue web and gives the product bulk and softness and a desired surface pattern. If the embossing nip is meant for ply combining only and not that much for surface decoration the nip is called a marrying nip. It is similar to the embossing nip with the exception that the embossing pattern has lower height profile. In this specification these both nips are called embossing nips. Also other types of fiber web can be embossed, for example board and paper webs.

Embossing of the tissue web is a challenging converting process due to high running speeds of the wide (widths up to 6 meters or even more) converting line following the tissue production line. It might be considered as the most challenging part-process of a converting line. If the embossing nip is inclined or nip load of the nip is uneven, the thickness and bulkiness profile in CD-direction of the embossed tissue product will be correspondingly uneven. Also the quality of the embossed pattern will be lower. Poor profile in CD-direction will cause further problems: profile of the wound tissue roll will also be poor (it can be carrot shaped, it may have bulges, it might be higher at ends or at middle etc.), which will cause winding problems or even make the winding impossible. In cases the embossing nip is uneven the tension profile of the web will also be correspondingly uneven, which leads to breaks and creases of the web, to lower running speeds and further to poor profiles of tissue roll and to winding problems.

As a marrying roll in the embossing nip different kinds of deflection compensated rolls may be used by which nip profile can be adjusted. Such deflection compensated rolls are known as such and may be exemplified by swimming-type of rolls and piston-type of rolls, both having pressurized oil between the rotating roll shell and the stationary shaft, the first type having a pressurized chamber at the nip between the shell and the shaft, and the latter type having hydraulically adjustable pistons arranged on the shaft. Nip load and nip inclination can also be adjusted. Adjustment is performed by moving the position of the marrying roll in respect of the embossing roll. In modern embossing machines pneumatic actuators are used for nip load and nip inclination adjustment by pneumatic valves or by valves controlled via display of an automatic control system. In older embossing machines adjustment of nip load is manual and it is done by first closing the nip (using the pressure that is present in the pneumatic system) against mechanical stoppers, and then manually adjusting, based on previous knowledge and personal experience of the operator, the nip pressure profile and nip straightness by screws located at one or both ends of the marrying roll thus bringing the nip rolls to a small distance away from each other (while the soft coating conforms). Both adjustment manners explained above are based on use of nip paper test results. In a nip paper test a nip paper is placed in between the rolls when the nip is closed. Afterwards the nip paper indicates the length of the nip and the pressure profile of the nip, based on which the straightness of load can be defined. After the nip paper test the operator adjusts the nip load either mechanically by screwing the stopper or by adjusting the pneumatics. The nip paper test is repeated until the operator considers based on his/her previous knowledge that nip load is proper after which the production can be started. If during production, it is noticed that tension profile of the web is poor, a tissue roll is carrot-like or other problems occur, the adjustment process of the embossing nip is started again from the beginning. As evident this is time consuming and it can take even an hour before the machine is actually producing embossed tissue web with desired properties and machine runnability. In cases of web breaks, shut downs and changes of rolls the adjustment of the embossing nip properties to a proper level the time needed is even longer as the beginning values are not known. Especially when manual adjustment process is used it easily creates a bottle neck to the whole converting line. Another problem with the nip paper and similar conventional methods is their vulnerability and unreliability in circumstances of an embossing nip. This is because of the special nature of the embossing nip which contrary to traditional nips between two smooth rolls has one non-smooth surface against a smooth surface. The non-smooth surface of the embossing roll bears a surface pattern having peaks and valleys, often with varying peak heights thus making the gap between the surfaces of the two rolls non-constant. The nip profile resulted by the nip paper test may be largely affected by some individual peaks only while the lower peaks are ignored. In worst cases the highest peaks may even burst the nip paper. The measurement is thus spoiled.

An object of the invention is to create a method and arrangement for adjusting the position of rolls in an embossing nip in which the disadvantages of prior art methods and arrangements are eliminated or at least minimized.

In order to achieve the previous objects and those that will be presented later the method according to the invention is mainly characterized by the features of the characterizing part of claim 1.

The arrangement according to the invention is mainly characterized by the features of the characterizing part of claim 12.

According to the invention in the method and arrangement for adjusting the position of rolls forming a nip one of the rolls forming the nip is provided with sensor means for measuring the force or pressure influencing in the nip and the force or pressure measurement result is transmitted to a data processing system, which gives a control signal/control information based on which the position of the rolls in relation to each other is adjusted, and the other one of the rolls forming the nip has a non-smooth surface.

The roll that has a non-smooth surface is advantageously a roll that has on its surface outwards protruding parts or patterns.

According to an advantageous embodiment of the invention in the method and arrangement for adjusting the position of rolls forming an embossing nip, in which at least two webs are combined to a web with at least two plies, at least one of the rolls forming the embossing nip is provided with sensor means for measuring the force or pressure influencing in the embossing nip and the force or pressure measurement result is transmitted to a data processing system, which gives a control signal/control information based on which the position of the rolls forming the embossing nip in relation to each other is adjusted, advantageously adjusting the position of one of the rolls forming the embossing nip in respect of the other roll forming the embossing nip. Adjusting can be manual by an operator or automatic by an automatically controllable actuator.

In this description and the claims by embossing nip is meant nips, in which the tissue web is compressed between two rolls to create desired surface properties, for example desired patterns, to the web and/or combine two or more tissue webs to a single web with two or more plies.

In accordance with an advantageous aspect of the invention the nip profile between the two rolls forming the embossing nip is measured, a middle plane is calculated and the overall load level is adjusted as required.

Advantageously the relative position between the two rolls is adjusted continuously during embossing.

Advantageously the nip profile straightness of the embossing nip is adjusted based on the measurement result.

According to an advantageous aspect of the invention the marrying roll of the embossing nip comprises the sensor means for measuring the nip profile. According to a feature, based on the measurement results a middle plane is calculated and based on the middle plane nip load level of the embossing nip is adjusted, advantageously automatically. A straight line is adapted to the nip profile and based on the slope of the straight line the possible nip inclination can be corrected. According to an advantageous feature based on the form of the profile the nip profile of the embossing nip can be adjusted, in cases automatically controllable profiling actuator and / or one roll with deflection compensation is provided. According to an advantageous feature based on the measurement results also an indicator of wear of the coating of the roll is obtained, which also can be automatized (difference of the form of the measured profile and the measured reference profile after grinding).

The invention provides for remarkable time savings as nip paper tests are not needed and the operator / the automatics can adjust the embossing nip based on the information of the data processing system based on the measurement results.

The invention also provides the possibility of observing the nip profile online during the embossing and thus when poor profile is indicated necessary correction can be made immediately automatically or manually.

Advantageously the sensor means of the roll are pressure or force sensitive sensor means. Also sensor means based on for example optical fiber can be used. According to an advantageous feature the sensor means extend continuous over the length of the measurement area, i.e. the effective nip length in cross-direction of the web, but also other types of sensor arrangements can be used.

According to an advantageous aspect of the invention as sensor means for measuring the nip force or pressure a pressure-sensitive foil is used embedded on the surface of the roll under the soft coating layer for example embedded in grooves made on the surface of the roll under the soft coating.

In the following the invention is described in more detail by reference to the accompanying drawing in which
Figure 1 shows schematically an example of an embossing nip.
Figure 2 shows schematically an example of an embossing nip with actuators for adjusting the position of one nip roll of the nip.
Figure 3 shows schematically an example of an embossing nip in which the position of nip rolls is adjusted manually.
Figures 4a - 4b show examples of roll with sensor means.

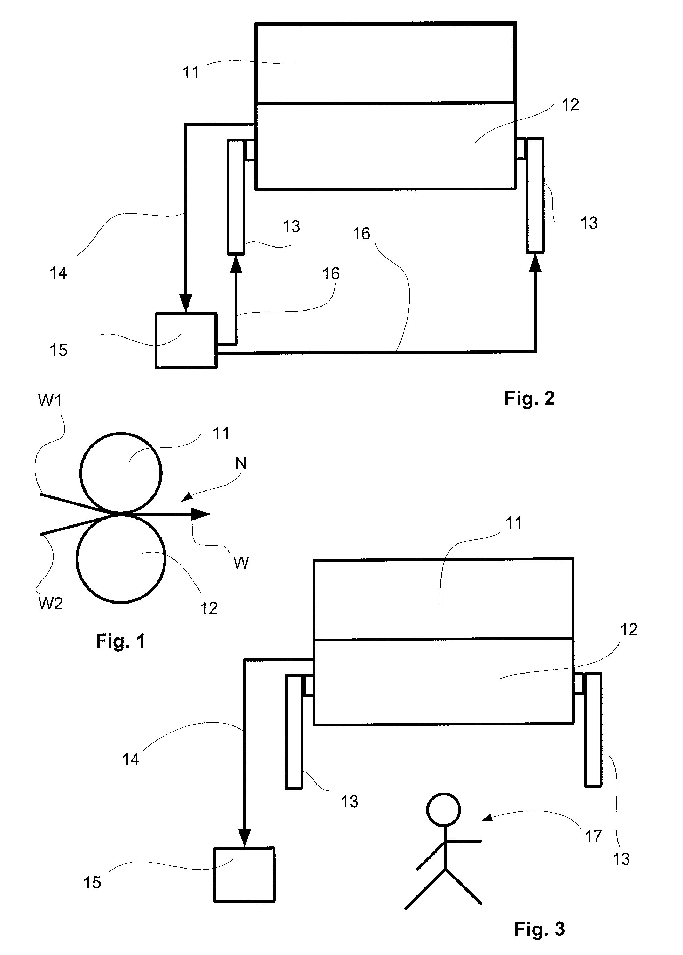

In the figures same reference signs are used for corresponding parts if not otherwise mentioned. It should be noted that even though the example of figures 1 - 3 relate to embossing of tissue web the invention is not limited to embossing and tissue webs only. For example other devices in connection with fiber web production than embossing machine comprise also two rolls the relative position of which is to be a defined position required by the process. It should also be remembered that other material webs than tissue can be embossed for example board and paper.

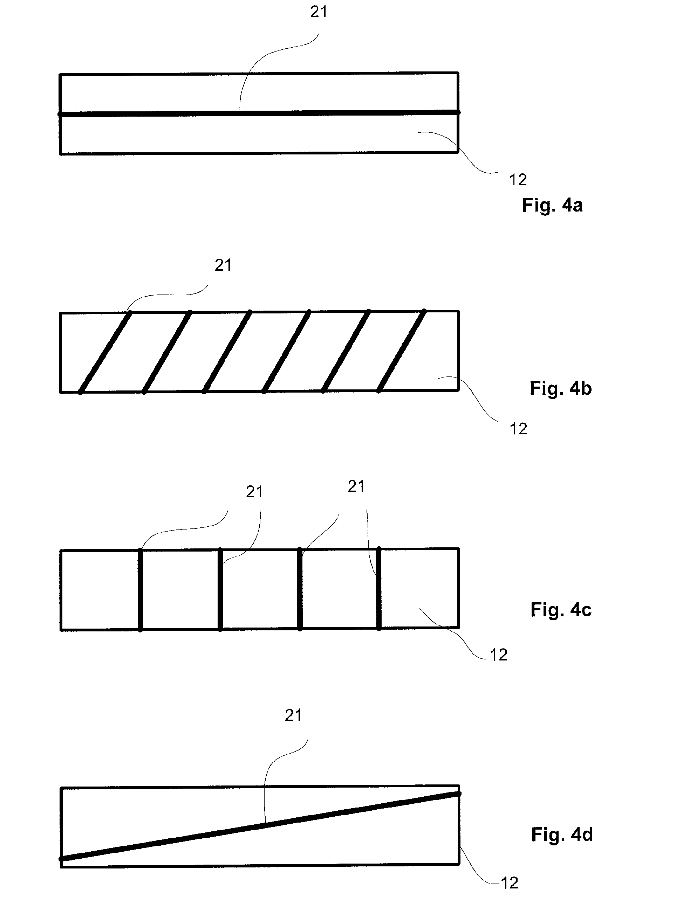

In the examples of figures 1 - 3 embossing nip N is formed between an embossing roll 11 and a marrying roll 12. The tissue webs W1 and W2 are led to the nip N to be combined to form a two-ply web W having a decorative pattern on its surface. The rolls 11, 12 need to have the defined relative position in order to produce embossed product with desired quality and machine runnability. The embossing roll 11 is made of steel and bears on its surface the emboss pattern as a relief that is transferred through pressure onto the web. The marrying roll 12 that is the counter roll of the embossing roll 11 in the embossing nip N has soft coating of rubber or polymer material, such as polyurethane. The embossing nip N combines two or more plies of the tissue web to a single web with multiple plies and gives the product its bulk and softness and proper attachment of the plies. With the aid of the emboss pattern the two or more plies of the tissue webs are attached together mechanically and receive simultaneously a surface pattern. It is important that the rolls 11, 12 have a mutual contact pressure or nip load which is not too high to save the bulk, but still sufficient to bond the webs together reliably enough for further processing and use. Thus it is important that the pressure profile is substantially even over the whole width of the web. The marrying roll 12 of the embossing nip N comprises sensor means 21 (figs. 4a - 4d) for measuring the embossing nip N profile.

The sensor means 21 measures the force or pressure of the nip during the embossing and the measurement results are transmitted via a connection 14, advantageously wireless, to a data processing system 15 which gives a control signal via connection / connections 16 to the actuator /actuators 13 of the marrying roll 12 automatically in the example of figure 2. The actuators 13 can be external means, such as pneumatic actuators, for radially adjusting the position of the roll ends and thus affecting the profile and/or cross-machine straightness of the nip, and/or vertically adjusting the position of the roll ends thus affecting the possible offset of the nip in machine direction. Not shown in the figures, but in case the roll 12 is a deflection compensated roll the adjustment means or actuator/actuators 13 are located inside the roll 12, being a pressurizable chamber or individually/zone-wise adjustable pistons or loading elements by which the roll shell is radially moved closer to or farther off the embossing roll 12, enabling regulation of the pressure profile of the nip at any location of the nip.

In the example of figure 3 the embossing nip N is adjusted manually. The nip force or pressure profile in the nip N is measured by sensor means 21 as in the example of figure 2 and the measurement result is transmitted via connection 14 to the data processing system 15 which gives the information to the operator 17 for example via display or printer etc. and the operator can then manually adjust actuators 13 of the roll 12 and thus the embossing nip based on the information from the measurement results. The system 15 can also calculate a mean plane of the measured values and provide a straight line that is adapted to the nip profile and based on the slope of the straight line the possible nip inclination can be corrected by adjusting the pneumatic actuators 13.

Figures 4a - 4d show different alternatives for installing the sensor means 21 on the roll 12. Fig. 4a shows an alternative in which the sensor means 21 has been installed directly in the direction of the longitudinal axis of the roll 12. In fig. 4B an alternative is shown in which the sensor means 21 has been installed as a spiral. In figure 4c an alternative is shown in which the sensor means 21 are installed in the direction of the periphery of the roll. In figure 4d an alternative is shown in which the sensor means 21 has been installed in inclination in respect the longitudinal axis of the roll 12. In the examples of figures 4a - 4d continuous sensors are show but also other types are applicable. The sensor 21 can be installed in a groove made to the body of the roll 12. A polymer cover, such as polyurethane, is applied on the roll body preferably on two layers such that the radially inner layer has a higher hardness than the radially outer or the functional layer. As an example, the lower PU layer may have a hardness of 5 to 10 P&J, while the outer PU layer is remarkably softer, depending on the requirements of the process, for example in the range of 50 - 70 P&J. It is important that the roll cover hardness is so selected that it conforms under the relief-pattern evening out the local load points of the dotted peaks of the relief-pattern thus enabling sensing of the load for the sensor. In a marrying nip where at least two tissue webs are combined to form a tissue web with at least two pies, the hardness of the lower PU layer may be 5 -10 P & J while the pattern height is lower and in an embossing nip where pattern is created on the surface of the tissue web the hardness of the cover is 50 - 70 SHa. The cover may comprise one layer of same material or two layers in which the lower layer is harder and the surface layer is softer.

Above only some advantageous examples of the invention have been described, it should be understood that many modifications and alterations are possible.
The invention relates to a method for adjusting the position of rolls (11, 12) forming a nip (N), in which one of the rolls (12) forming the nip is provided with sensor means (21) for measuring the force or pressure influencing in the nip (N) and the force or pressure measurement result is transmitted to a da-ta processing system (15), which gives a control signal/control information based on which the position of the rolls (11, 12) in relation to each other is adjusted. The other one of the rolls (11) forming the nip (N) has a non-smooth surface. The invention also relates to an arrangement for adjusting the position of rolls (11, 12) forming a nip (N), in which arrangement one of the rolls (12) is provided with sensor means (21) for measuring the force or pressure influencing in the embossing nip (N) and the arrangement comprises a data processing system (15), to which the force or pressure measurement result is transmitted for creating a control signal/control information based on which the position of the rolls (11, 12) in relation to each other is adjusted. The other one of the rolls (11) forming the nip (N) has a non-smooth surface.

## Claims

1. Method for adjusting the position of rolls (11, 12) forming a nip (N), in which one of the rolls (12) forming the nip is provided with sensor means (21) for measuring the force or pressure influencing in the nip (N) and the force or pressure measurement result is transmitted to a da-ta processing system (15), which gives a control signal/control information based on which the position of the rolls (11, 12) in relation to each other is adjusted, **characterized in, that** the other one of the rolls (11) forming the nip (N) has a non-smooth surface.

2. Method according to claim 1, **characterized in, that** in the method the position of the rolls (11, 12) in relation to each other is adjusted by adjusting the position of at least one of the rolls (11, 12).

3. Method according to claim 1, **characterized in, that** in the method the nip (N) formed is an embossing nip (N) formed between an embossing roll (11) and a marrying roll (12) and that at least two webs (W1, W2) are led through the nip (N) to be combined to form a web (W) having at least two plies.

4. Method according to claim 1, **characterized in, that** in the method the sensor means (21) are provided in the roll (12) of the embossing nip (N) that is a marrying roll (12) of the embossing nip (N) and that in the method the position of the marrying roll (12) is adjusted.

5. Method according to claim 1, **characterized in, that** in the method adjusting is done manually by an operator (17) based on the control information from the data processing system (15).

6. Method according to claim 1, **characterized in, that** in the method adjusting is done automatically by an automatically controllable actuator based on the control signal from the data processing system (15).

7. Method according to claims 1, **characterized in, that** in the method the sensor means (21) measure the force or pressure of the embossing nip (N) during the embossing and the measurement results are transmitted via a connection (14), advantageously via a wireless connection, to a data processing system (15), which gives a control signal via further connection/connections (16) to an actuator/actuators (13) of the roll of the embossing nip that is a marrying roll (12) of the embossing nip (N) automatically and that the actuator/actuators (13) radially adjust the position of ends of the marrying roll (12) and influence the profile and/or cross-machine straightness of the nip (N) and/or vertically adjust the position of ends of the marrying roll and influence the possible offset of the nip (N) in machine direction.

8. Method according to claim 1, **characterized in, that** in the method the nip profile between the two rolls (11, 12) is measured by the sensor means (21), a middle plane is calculated in the data processing system (15) and the overall load level of the nip is adjusted as required.

9. Method according to claim 1, **characterized in, that** in the method the relative position between the two rolls (11, 12) is adjusted continuously during embossing.

10. Method according to claim 1, **characterized in, that** in the method the nip profile straightness is adjusted based on the measurement result.

11. Method according to claim 1, **characterized in, that** in the method the nip profile is adjusted based on the measurement result by adjusting a deflection compensated roll that is one of the two rolls (11, 12) forming the embossing nip (N).

12. Arrangement for adjusting the position of rolls (11, 12) forming a nip (N), in which arrangement one of the rolls (12) is provided with sensor means (21) for measuring the force or pressure influencing in the embossing nip (N) and the arrangement comprises a data processing system (15), to which the force or pressure measurement result is transmitted for creating a control signal/control information based on which the position of the rolls (11, 12) in relation to each other is adjusted, **characterized in, that** the other one of the rolls (11) forming the nip (N) has a non-smooth surface.

13. Arrangement according to claim 12, **characterized in, that** nip (N) is an embossing nip (N) formed between an embossing roll (11) and a marrying roll (12) and that at least two webs (W1, W2) are led through the nip (N) to be combined to form a web (W) having at least two plies.

14. Arrangement according to claim 12, **characterized in, that** one of the rolls is an embossing roll (11) and one of the rolls is a marrying roll (12) and that the sensor means (21) are provided in the marrying roll (12).

15. Arrangement according to claim 12, **characterized in, that** the arrangement further comprises actuator/actuators (16) for adjusting the position of at least one of the rolls forming the embossing nip (N).

16. Arrangement according to claim 12, **characterized in, that** the sensor means (21) of the roll (12) are pressure or force sensitive sensor means and/ or the sensor means (21) are based optical fiber.
